# EUROPEAN PATENT SPECIFICATION

(11) **EP 1 461 218 B1**
(45) Date of publication and mention of the grant of the patent: **07.11.2007**
(21) Application number: 02793122.9
(22) Date of filing: 30.12.2002
(51) Int. Cl.: B60J 3/02

(54) **ILLUMINATED VANITY MIRROR UNIT**
BELEUCHTETER KOSMETIKSPIEGEL
ENSEMBLE MIROIR DE COURTOISIE LUMINEUX

(30) Priority: 28.12.2001 DE 10164349
(43) Date of publication of application: 29.09.2004
(73) Proprietor: Fico I.T.M., S.A., 08191 Rubi, Barcelona (ES)
(72) Inventor: FERNANDEZ, Miguel Angel, E-08924 Santa Coloma de Garamet (ES); CUADRA, Oscar, E-08940 Torrelles de Llobregat (ES)
(74) Representative: Hess, Peter K. G.
(86) International application number: PCT/EP2002/014807
(87) International publication number: WO 2003/055708

(56) References cited:
- EP-A- 0 403 846
- EP-A- 0 745 498
- WO-A-01/53125
- FR-A- 2 572 031
- US-A- 5 575 552

## Description

### 1. Field of the invention

The present invention relates to a mirror unit for the inside of motor vehicles. This mirror unit serves as, e.g. vanity mirror, in particular for the installation in sun visors on the co-driver's side.

### 2. Prior art

The prior art discloses various constructions of vanity mirrors which can be mounted in sun visors of motor vehicles. These vanity mirrors vary in their construction, depending on the interior equipment of the motor vehicle.

In the simplest embodiment, the vanity mirror is glued into the sun visor body, surrounded by a frame. Therein, it is facing the inside roof lining of the motor vehicle and is not visible until the sun visor is hinged down. In order to protect the vanity mirror against mechanical impact, it is also known to provide it with a movable cover. This cover is opened prior to using the vanity mirror, and closes again when the sun visor is hinged up.

Motor vehicles with higher-standard interior equipment comprise vanity mirrors provided with illumination means. Such mirror constructions are e.g. described in WO 85/00028, EP 0 337 251 A1, and US-A-4 734 831. The illumination of the vanity mirror enables the mirror to be used even with insufficient illumination conditions, which occur e.g. when driving in the evening. Additionally, such illumination prevents the indoor illumination from having to be switched on, which might hinder the driver.

The illumination of the vanity mirror is switched on and off either by means of a separate switch or by opening and closing a cover, already mentioned above. A plurality of incandescent bulbs, mostly mounted behind the vanity mirror, supply the necessary light which is conducted to the outside alongside the mirror's frame via components of transparent materials. In this context, it is a problem that common incandescent bulbs create heat. The material of the entire mirror unit has to be able to resist this heat without being damaged. Moreover, the mirror unit has to be constructed in such a way that the heat is carried off via appropriate ways, in order to avoid a heat accumulation. This factor requires expensive constructions and ventilation concepts in the sun visor or the mirror unit.

This kind of electrical devices has various disadvantages. The used incandescent bulbs transform to much electrical power into heat. Therefore, the consumed energy is too high for the realized level of illumination. Further, said bulbs are highly inefficient and their service life is short. Thus, the construction of the mirror unit has to be adapted to change said bulbs at the end of their service life. Moreover, the spatial extension of the incandescent bulbs leads to a mirror unit large in size wherein further miniaturization is limited.

Another disadvantage follows from the electric circuit for controlling said bulbs. Said circuit includes several metallic components for fixing said bulbs and connecting them to the power supply of the car and/or a battery. Accordingly, said components have to be mounted, clipped and adjusted in the sun visor or mirror unit which requires several expensive procedure steps.

Another mirror unit is disclosed by EP 0 450 044 B1. This mirror unit is also illuminated by means of incandescent bulbs and is removable from the sun visor. In order to realize illumination of the mirror unit also if removed, the mirror unit comprises corresponding accumulators. These accumulators are charged by means of connection to the electrical supply of the motor vehicle while the mirror unit is set into the sun visor. If the mirror unit and its illumination are used while set into, electrical power supply is provided by means of direct connection to the electrical supply of the motor vehicle.

This kind of electrical supply of the mirror unit if removed as well as if set into has various disadvantages. If the mirror unit is removed, the used incandescent bulbs transform to much electrical power into heat. This stresses the accumulators used, and their service life is shortened in such a way that they have to be charged after short intervals. Moreover, the spatial extension of the incandescent bulbs leads to the mirror unit having large spatial requirements, which also has to guarantee the above-mentioned carrying off of heat.

Another disadvantage results from the necessary electrical connection of the sun visor and therefore the mirror unit, if set into, to the electrical supply of the motor vehicle. During production of the motor vehicle it is e.g. necessary to lay electrical supply lines up to the sun visor to the mirror unit. These supply lines are laid under a cover for esthetic reasons. Further, they have to resist the sun visor's movements without being damaged. Based on the above requirements, work-intensive steps are necessary for laying the electrical lines and correspondingly high-end materials are necessary for the lines. This results in a time-consuming production method and high expenses based on the mirror units from prior art.

A mirror unit according to the preamble of claim 1 is known from WO-01/053 125.

Therefore, it is the problem of the present invention to provide an illuminated mirror unit for motor vehicles avoiding the waste of energy, increasing the durability and reliability of the components and moreover having reduced dimensions. It is a further problem of the invention, to provide a mirror unit not connected to the electrical power supply of the car which guarantees a sufficient service life at the same time and which allows the use of different mirrors.

### 3. Summary of the invention .

The above problem is solved by a mirror unit for motor vehicles, in particular for sun visors, comprising the combination of the features of claim 1. The mirror unit can be removably mounted in the interior of a motor vehicle.

It comprises a mirror with at least one light emitting diode (LED), preferably a white LED, for illuminating said mirror; and an electric circuit arranged on a printed circuit board for supplying said LED with power and for controlling said LED. Further, said illuminated mirror unit and said electric circuit are operated independent of an electrical supply of the motor vehicle.

The present invention provides a mirror unit which is operationally independent of outside electrical supply systems and which is therefore operated constantly by means of its own electrical circuit. In this context, outside electrical supply systems refer to e.g. the electrical supply within the motor vehicle by means of battery and dynamo. The present invention therefore enables the interior equipment of motor vehicles, e.g. sun visors or neck rests into which the mirror unit of the present invention is mounted, to be produced in a much simpler way. Keeping up the standard, this allows for reduction of costs. The claimed mirror unit uses illumination means characterized by corresponding luminosity, lower current consumption, and low electrical loss due to the transformation of electrical power into heat compared to known illumination means. These illumination means are formed by LED, preferably white LED, which are supplied by means of an appropriate electrical circuit on a printed circuit board, integrated into the mirror unit, supplying the illumination means with electrical power over a sufficient period of time. This electrical circuit comprises at least batteries or accumulators in the form of small cells and an electrical supply circuit. Due to the high efficiency of this illuminating system, it is possible to operate the same independently of an electrical supply of the motor vehicle. Based on the configuration in accordance with the invention of the mirror unit, the mirror unit can be mounted in a sun visor in such a way that it is removable and therein guarantees for sufficient illumination of the mirrors during their use.

Since many years red, green and yellow LED are used for electronic devices e.g. as indicators or the red LED for mobile battery chargers. The present invention preferably uses white LED for providing an illuminating system. Contrary to the common practice, the present invention provides a mirror unit using at least one white LED having a size and a power consumption better than the prior art bulb systems. Correspondingly, the same luminosity level compared to the prior art is realized by one third in current consumption by the present invention. Further, said LED are almost ten times smaller than said bulbs. According to the present invention, a printed circuit board is used for controlling said LED which guarantees a space saving design. In view of the generally used metallic components for controlling said illumination means, said printed circuit board can be equipped with different configurations to provide extra services without changes in construction of said mirror unit. Accordingly, expensive procedure steps saved during production of mirror units having different technical features.

Using light-emitting diodes in accordance with the invention guarantees low power consumption, heat development so low that it can be neglected, and little spatial requirements in comparison with common illumination means, such as e.g. incandescent bulbs. At the same time, the luminous intensity produced by the light-emitting diodes is sufficient for using them as illumination means of the mirror unit. Further, the light-emitting diodes do not have to be covered necessarily with a lens as is the case with common illumination means. This results in an advantageous assembly of the mirror unit from less individual elements, resulting in a simplified and cheaper production of the mirror unit.

In accordance with the present invention, the mirror unit which is removable comprises at least two different mirrors, in particular a concave mirror, the rear sides of which mirrors are opposed to each other. Preferably, the electrical illumination means are provided in this case in such a way that the at least two mirrors can be illuminated simultaneously or separately from each other.

In accordance with a preferred embodiment of the present invention, one of these mirrors is, e.g., a common mirror, while the other mirror enlarges the mirror image due to its construction. This results in a plurality of possibilities of use of the mirror unit which also realizes an increased comfort for the users and passengers of the motor vehicle. In this context, it is also possible to mount more than two different mirrors in the mirror unit. For spatial reasons, the at least two mirrors are provided back to back in the mirror unit. Corresponding to the requirements, one side or the other of the removable mirror unit can then be used. In order to provide for sufficient illumination of the mirror unit, the illumination means are provided in such a way that they illuminate constantly or separately the front and rear sides of the mirror unit. In this context, it is also possible, however, to switch off the illumination of that side which is not used, in order to save electrical power.

In accordance with the invention, the mirror unit preferably comprises at least one moveable cover.

The mirrors mounted in the mirror unit are preferably covered by a moveable cover according to the invention. One cover for each of the mirrors can be provided in the case of a two-sided removable mirror unit i.e. in the case of a mirror unit with a mirror on the front and rear sides. The covers, which are hingably mounted on the mirror unit by means of a hinge or something similar, protect the mirrors and the mirror unit against mechanical damage as well as against soiling. Moreover, they add up to protecting the passengers against injuries caused by possible fragments of mirrors, if the mirrors of the mirror unit are destroyed in the case of an accident.

In accordance with another preferred embodiment of the mirror unit according to the invention, the electrical illumination means are switched by means of a separate switch or by means of opening and closing the cover.

As already mentioned above, the at least two mirrors of the mirror unit are each covered by a moveable cover in a preferred embodiment of the present invention. Thus, the respective mirror can only be used if the cover has been opened and if the mirror has therefore been released. Correspondingly, it is merely necessary to illuminate that mirror whose cover has been opened. Therefore, the moveable cover is in accordance with the invention preferably provided with a switch, in order to switch the illumination of the uncovered mirror on if the cover is opened and in order to switch the illumination off again when the cover is subsequently closed. Based on this assembly, the electrical power consumption of the illuminated mirror unit can be reduced, thus increasing the service life of the respective power sources.

In accordance with yet another preferred embodiment of the illuminated mirror unit, the electrical illumination means are switched off after a certain period of time by means of a time circuit.

In order to limit the power consumption of the illumination means in accordance with the invention, the illumination means are automatically switched off after a certain period of time. This period of time is, e.g. realized by a common electrical time circuit. This time circuit is independent of the illumination means being switched on and off by means of a separate switch or by opening and closing the cover. In the case of a premature switching off, the illumination means can be switched on again by closing the cover and opening it again. It is also possible to mount a corresponding separate switch in the mirror unit for this purpose.

In another preferred embodiment of the illuminated mirror unit according to the invention, the electrical illumination means are switched on dependent on the brightness of the surroundings, which is determined by means of a signal of a brightness-measuring circuit.

The illumination means are completely switched on in common mirror devices as soon as e.g. the cover of the mirror is opened. Switching on is independent of whether the light conditions in the surroundings require illumination or not. This results in an additional electrical power consumption which can be avoided. It is possible by means of electrical circuits to determine the brightness of the surroundings. A threshold value can be set in these circuits wherein the illumination means or merely a certain number of illumination means are switched on if the value is reached. It is also possible to operate the illumination means with reduced output. On this bases, the output of the illumination means of the mirror unit in accordance with the present invention is adapted to the light conditions of the surroundings. At the same time, a waste of power by not necessary illumination is reduced.

In accordance with yet another embodiment of the present invention, one of the at least two mirrors of the illuminated mirror unit is at least partially semipermeable and the brightness is measured through the semipermeable portion of the mirror.

In order to configure the illuminated mirror unit with as little spatial expansion as possible, the brightness-measuring circuit as well as said printed circuit board with LED can be provided e.g. between the at least two mirrors or under said mirror. A corresponding sensor for determining the brightness of the surroundings is mounted behind a mirror. This is possible using an at least semi-transparent material which allows a good reflection for use as a mirror as well as the transmittance of sufficient light for measuring behind the mirror to supply the sensor with light.

### 4. Short description of the drawings

The present invention is described in detail referring to the accompanying drawings, showing:
- Fig. 1: a preferred embodiment of a sun visor with illuminated mirror unit, mounted fixedly;
- Fig. 2: a preferred embodiment of said mirror unit having transparent portions for illuminating said mirror unit;
- Fig.3: a preferred embodiment of a printed circuit board for supplying/controlling said light emitting diodes shown as a circuit sketch;
- Fig.4: a preferred embodiment of a mirror having transparent portions;
- Fig.5: a preferred embodiment of an autonomous mirror unit;
- Fig. 6: a preferred embodiment of a removable illuminated mirror unit with two mirrors, removed;
- Fig. 7: a preferred embodiment of a supply circuit for said LED shown as a circuit diagram;
- Fig. 8: a preferred embodiment of a time circuit for said light emitting diodes shown as a circuit diagram;
- Fig. 9: a preferred embodiment of a brightness circuit for said light emitting diodes shown as a circuit diagram;
- Fig. 10: a flow chart in order to describe the cooperation of the various electrical components of the illuminated mirror unit; and
- Fig. 11: a preferred embodiment of the complete circuit for said light emitting diodes shown as a circuit diagram.

### 5. Detailed description of the preferred embodiment

The present invention relates to an illuminated mirror unit 20 for the interior of motor vehicles. The illuminated mirror unit 20 can e.g. be mounted on the rear side of a sun visor 1 on the co-driver's side. It is also possible to mount the present invention into the rear sides of neck rests of driver and co-driver. In this way, the passengers on the backseat are enabled to use the illuminated mirror unit 20. The present invention can further be used in trains, airplanes, or busses.

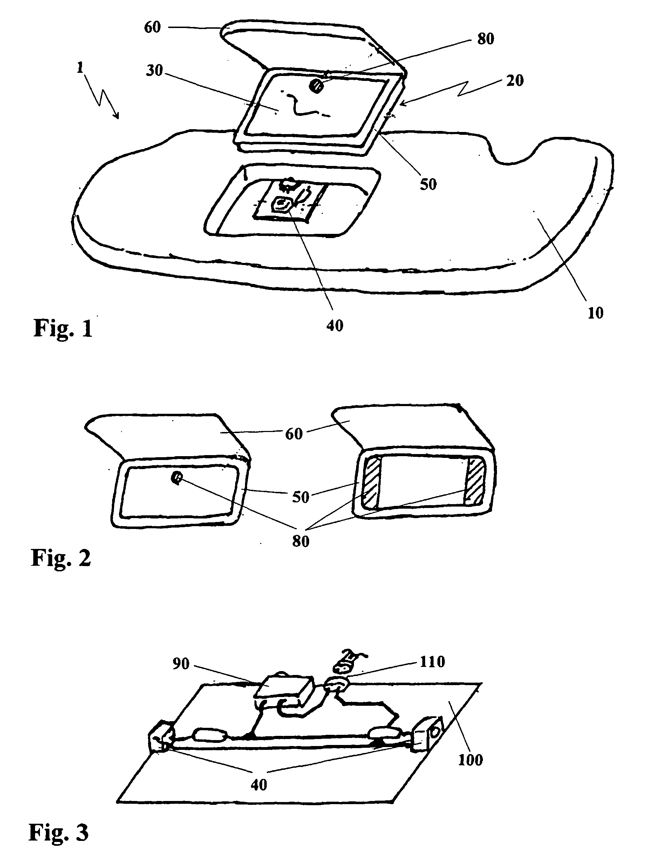

The functions as well as the constructive and technical features are described alongside the example of an illuminated mirror unit 20, mounted in a sun visor 10. Figure 1 shows a preferred embodiment of the present invention wherein the illuminated mirror unit 20 is fixedly mounted in a sun visor 10. The illuminated mirror unit 20 in accordance with the invention comprises a mirror 30 and illumination means 40. All possible mirror constructions can be used as mirrors 30 such as a plane mirror, a concave mirror and a convex mirror. The illumination means 40 are preferably formed in accordance with the invention by white light-emitting diodes 40, provided in corresponding number in the proximity of the mirror 30. However, light-emitting diodes 40 with other colors, such as e.g. yellow, green, blue or red, can be used. Further, all arbitrary forms of the light-emitting diodes 40 are possible as long as they are appropriate for sufficient illumination of said mirror unit 20. The light-emitting diodes 40 are characterized by low power consumption, little weight, and little spatial requirements. The illuminated mirror unit 20 according to the invention can therefore be produced with smaller dimensions than common mirror units. Based on the afore-mentioned advantages of the light-emitting diodes 40, preferably used in accordance with the present invention, it is also possible to replace them with similar illumination means 40, having little spatial requirements and low power consumption.

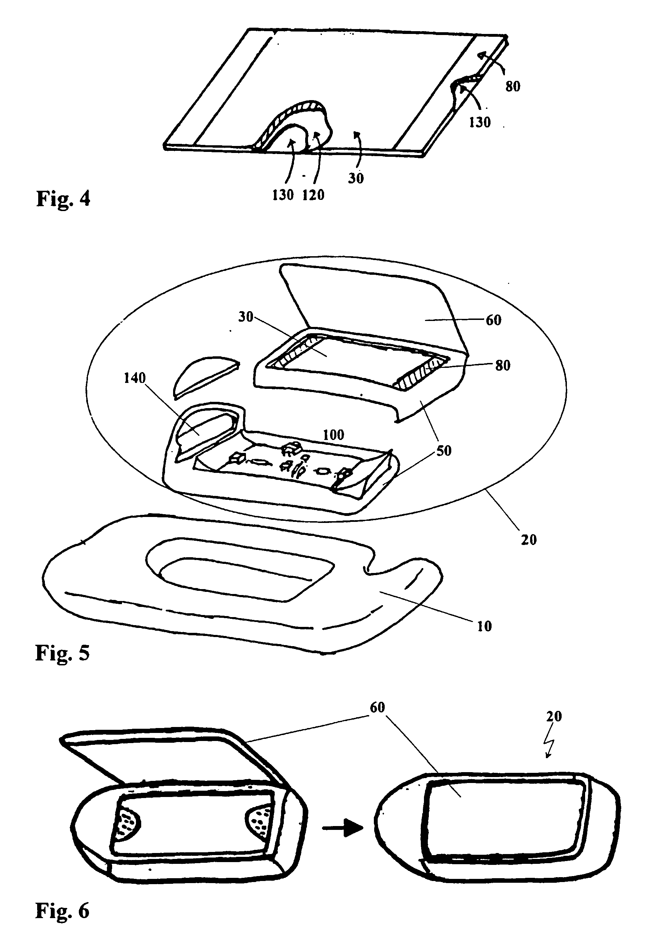

Said mirror 30 is manufacture from glass wherein a thin film of reflective material 120 with no or with limited transmittance is coated on one side of said mirror by a chemical process for achieving said mirror 30. Moreover, a protection 130 is glued or fixed on said mirror side to retain mirror fragments in case of an accident. It is furthermore preferred to remove portions of said reflective material 120 on said mirror surface by laser treatment. This means that the surface portion 80 free of reflective material 120 becomes transparent. The light emitting device e.g the LED 40 illuminates said mirror unit through said transparent portions 80 of the mirror 30 without using transparent diffusers being extra parts. A drawing of the mirror 30 according to a preferred embodiment of the present invention is shown in Fig. 4. Said portions of the mirror 30 still coated with said reflective material 120 continues working as a mirror 30. The above mentioned protection is formed by a transparent protection film 130 to guarantee the transmittance of the portion free of reflective material 120 and to retain the fragments of the mirror 30 in case of an accident.

In order to configure the illuminated mirror unit 20 with as little spatial expansion as possible, the LED 40 and the electric circuit board 100 are preferably arranged under said mirror 30 or between said mirrors 30.

The above mentioned mirror 30 with transparent portions 80 according to a preferred embodiment of the present invention is shown in Fig. 2. Said illuminated mirror unit 20 is fixedly mounted in a sun visor 10. It comprises a mirror 30 with transparent portions 80 for illuminating through said mirror by said LED 40. All possible mirror constructions can be used as mirrors 30 such as a plane mirror, a concave mirror and a convex mirror.

A sketch of the basic electric circuit for supplying/controlling said LED 40 according to a preferred embodiment of the present invention is shown in Fig. 3. This circuit is arranged on an electric circuit board 100. Said electric circuit board 100 is connected to said LED 40 and the different electrical components to assure the accurately working of said mirror unit 20. Additionally, said circuit is connected to a power supply 140 (Fig. 5). A micro switch 90 for switching on/off said electric circuit is arranged to be actuated manually or by a moveable cover 60.

In accordance with the invention, the electrical supply 140 of the illuminated mirror unit 20 is preferably constantly separated from the electrical supply of the motor vehicle. Thus, it is no longer necessary to integrate the sun visor 1 with illuminated mirror unit into the electrical supply network of the motor vehicle. Time- and cost-intensive work steps for mounting the sun visor 1 with illuminated mirror unit can in this way be saved during the production of the motor vehicle. In addition, this results in a simplified exchange of the sun visor 1 with illuminated mirror unit in the case of a defective or worn-out sun visor 10 since no electrical lines have to be cut and re-connected.

The electrical supply of the illuminated mirror unit 20 is realized by means of an electrical circuit transmitting the electrical power from batteries or accumulators of small dimensions to the light-emitting diodes 40. E.g. round cells or other mini cells are used preferably in accordance with the invention. These batteries can, e.g., supply a minimum voltage of 3 volts, which is then processed by the electrical circuit. The electrical circuit for electrical supply of the illuminated mirror unit 20 as well as the batteries are provided in the illuminated mirror unit 20 so that the latter is a compact and self-sustaining unit.

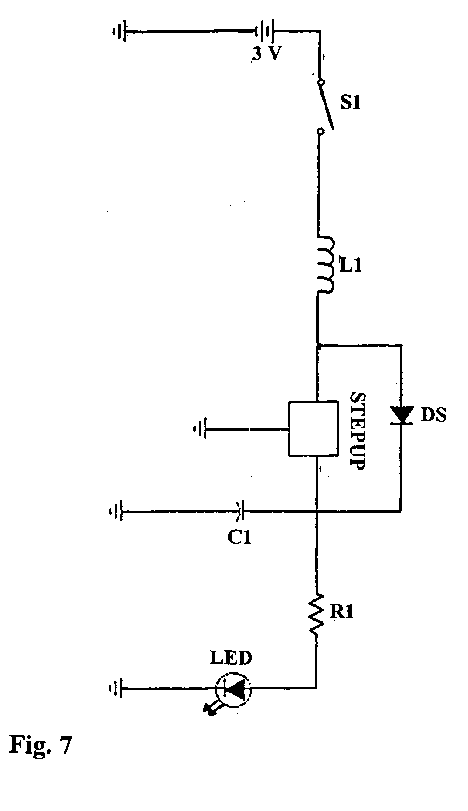

The above mentioned electrical supply circuit according to a preferred embodiment of the present invention is shown in Fig. 7. This circuit comprises a 3-volts-battery B1, a switch S1, a regulator STEPUP, a resistor R1 and at least one light emitting diode 40. The battery supplies the electrical energy if the electrical supply of said light emitting diodes 40 is activated by operation of said switch S1. Said regulator STEPUP is a DC-DC converter adapting the voltage level of said battery to the needed voltage for supplying said light emitting diodes 40. The advantage of said regulator consists in its efficiency whereby a loss of electrical energy is minimized. In case of a necessary distribution voltage of said light emitting diodes 40 of 4 volts, said regulator generates for example said voltage from the battery voltage of 3 volts. Said regulator STEPUP cooperates with an inductor L1, a diode DS and a capacity C1. The resistor R1 controls the electrical current supplying said light emitting diode 40. The light intensity of said light emitting diode 40 depends on this electrical currents. By corresponding variation of said resistor R1 e. g. manually by means of a potentiometer or by means of an electrical control, said light intensity of said light emitting diode 40 can be adapted to the light conditions in the motor vehicle.

The mentioned electrical circuit with the batteries 140 as well as the mirror 30 are in accordance with the invention preferably set into a frame construction 50 (not shown). This frame construction 50 can e.g. be made of plastics or metal in order to be adapted to the respective interior equipment of the motor vehicle. The frame construction 50 is accommodated and retained by a complementary counterpart within the sun visor 10. Depending on the construction of the frame construction to be accommodated and of the complementary counterpart, the illuminated mirror unit 20 is mounted in the sun visor 10 fixedly or in such a way that it can be removed. For this purpose, the two parts are either constantly connected by means of appropriate fixing means, e.g. by a snap-on mounting, or an appropriate manually actuatable lever or button mechanism is provided, retaining the illuminated mirror unit 20 removably in the sun visor 10. It is also possible to retain the mirror unit removably in the sun visor by means of magnets. Removable mounting of the illuminated mirror unit 20 results in increased comfort for the user. This comfort can still be increased in removable, illuminated mirror units 20 by further technical features, as explained below in detail. It is further preferred to equip said frame construction 50 with a clamp or a plastic strip for retaining tickets or small things to be needed in the car. E. g. said strip can be combined with a velcro fastening mounted on said sun visor 10.

As soon as the illuminated mirror unit 20 is used, no matter whether set into the sun visor 10 or removed, the illumination by means of the illumination means 40 preferred in accordance with the present invention can be switched on in various ways. In a preferred embodiment of the present invention, hinging down the sun visor 1 with fixedly mounted mirror unit 20 can automatically actuate a switch 90 switching on the light-emitting diodes 40. In accordance with yet another preferred embodiment of the present invention it is also possible to integrate this switch 90 in the illuminated mirror unit 20 in such a way that it can be reached from the outside so that it is manually actuated if illumination is required. It is also possible to couple the above-described switching possibilities to e.g. a fixed illumination in the interior of the motor vehicle. If the switch 90 is actuated, e.g. an infrared signal would then be sent to the illumination in order to switch it on as an additional illumination. The light-emitting diodes 40 and a possible additional illumination would also be switched off by means of the mentioned switch possibilities.

Further technical features are described in connection with another preferred embodiment of the present invention. The features explained are therein not limited to this embodiment but can be combined with all the illuminated mirror units 20 described herein.

Figure 6 shows yet another preferred embodiment of the present invention in the form of a removable illuminated mirror unit 20. This mirror unit 20 is mounted in e.g. a sun visor 10 in the above-described way so that it is manually removable. This has on the one hand the advantage that it can be used more conveniently. On the other hand, the rear side of the removable mirror unit 20 can also be equipped with a further mirror 30 and correspondingly used.

In accordance with the present invention, the removable illuminated mirror unit 20 is provided with at least two mirrors 30. These mirrors 30 are provided within the mirror unit 20 in such a way that their backs face each other. It is also possible to provide more than two mirrors, e.g. comprising a normal mirror, a concave mirror and a convex mirror.

The mirrors 30 provided on the front and rear sides of the mirror unit 20 are pref erably and in accordance with the present invention each covered by a moveable cover 60. Furthermore, these mirrors 30 are each illuminated by assigned light-emitting diodes 40, preferred in accordance with the invention. Depending on the construction of the removable illuminated mirror unit 20, the light-emitting diodes 40 are switched on and off by opening and closing the covers 60. The light-emitting diodes 40 can, however, also be switched on all together as soon as the removable mirror unit 20 has been released from its support. Then, switching off would be caused by setting the mirror unit 20 into, e.g., the sun visor 10. If the light-emitting diodes 40 are switched by the movements of the covers 60, which is preferred in accordance with the present invention, electrical power may be saved since only that mirror 30, which is presently used, is illuminated.

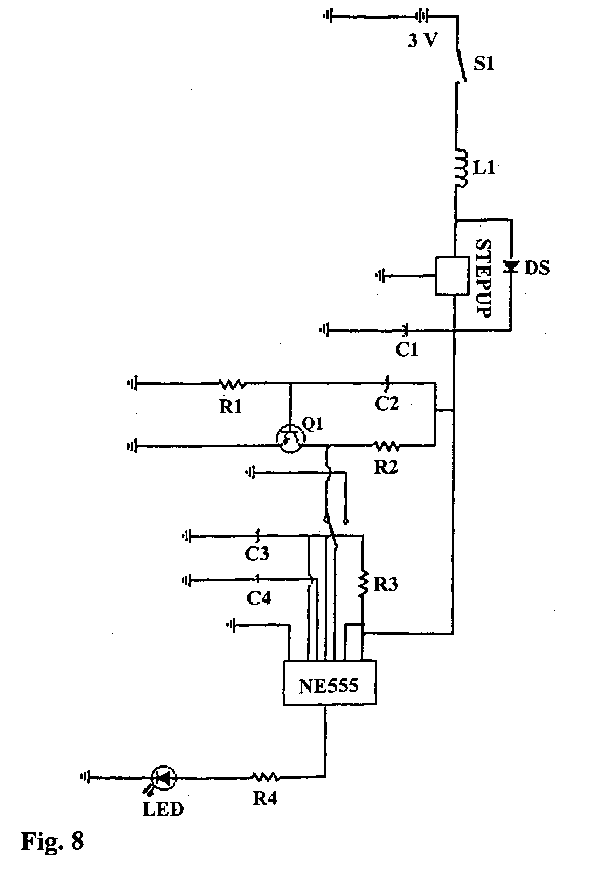

Another possibility for saving electrical power results from the use of a time circuit (see Fig. 8), preferred in accordance with the present invention. This time circuit is to switch off the light-emitting diodes 40 of the mirror unit 20 in accordance with the present invention after a certain time interval. This time interval can be varied in accordance with the customer's requirements. If the light-emitting diodes 40 switch off during a long-term use of a mirror 30, they can, e.g., be switched on again by closing and re-opening the cover 60 or by actuating a switch (not shown). This time circuit can e.g. also be used in connection with a illuminated mirror unit 20, fixedly installed.

The time circuit according to a preferred embodiment as shown in Fig. 8 comprises a time controller which is e. g. represented by the time integrated circuit NE555 of Texas Instruments. The other components of said time circuit result from the control and the supply of said time controller. Said time controller is according to a preferred embodiment of the present invention activated by an electrical pulse. This electrical pulse is generated by the capacity C2, the transistor Q1 and the resistors R1 and R2 which form an activation circuit. The switching on of said light emitting diodes 40, e. g. by opening the cover 60, generates a constant distribution voltage of said light emitting diodes 40 while the time circuit is preferably according to the invention activated by a negative electrical pulse of said activation circuit. The time circuit and said light emitting diodes 40 can be preferably according to the invention switched off by means of the switch S1 by generating an electric pulse. The switch S1 can e. g. be easily accessible for the user. The light emitting diodes 40 are activated for a certain time interval t dependent on the values of said resistor R3 and of said capacity C3. Said time interval t is calculated according to the following equation t=1.1·R3·C3.

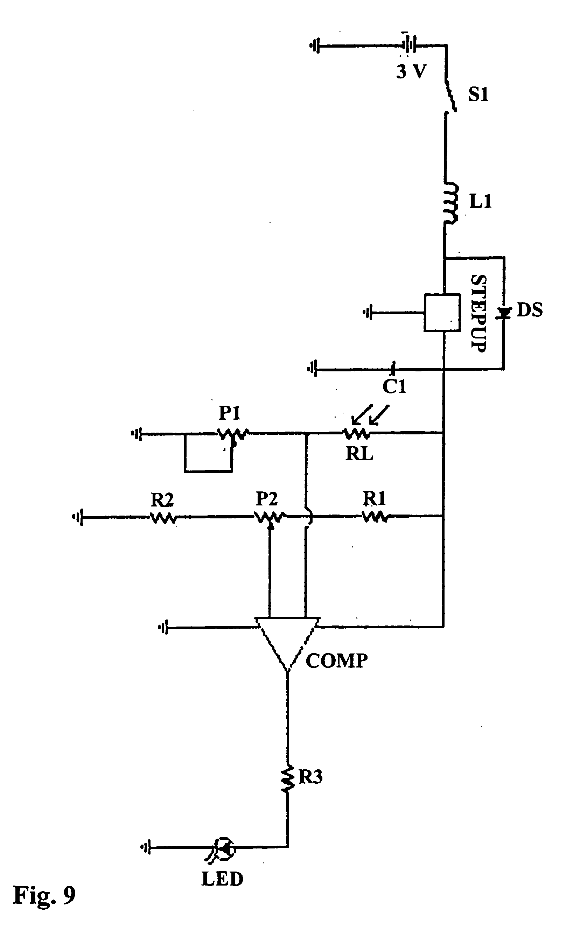

Besides using a time circuit, another preferred embodiment of the present invention uses a brightness circuit (see Fig. 9) for saving electrical energy. This brightness-measuring circuit comprises a brightness sensor by means of which the light conditions in the surroundings of the illuminated mirror unit 20 are determined. The preferred brightness circuit stores e.g. various threshold values regarding the brightness of the surroundings. If these threshold values are reached, the light-emitting diodes 40 are e.g. not at all switched on or only a chosen number of light-emitting diodes 40 is switched on. Moreover, it is also possible to operate the light-emitting diodes 40 with adapted output. In this way, it is guaranteed that the illumination with the light-emitting diodes 40 is only executed in an intensity as actually necessary due to the outside conditions. The brightness circuit can be installed in connection with a fixedly mounted illuminated mirror unit 20, similar to the above-described time circuit.

The preferred embodiment of said brightness circuit shown in Fig. 9 comprises an operational amplifier COMP serving as comparator. Dependent on the comparison of two voltage signals, an electrical supply of said light emitting diodes 40 is activated or not. Further, said brightness circuit comprises potentiometers P1 and P2, resistors R1 and R2 as well as a light dependent resistor LDR which varies its resistance dependent on the incident light quantity. Said LDR is preferably used a brightness sensor.

In accordance with another embodiment of the present invention, illumination of the mirror unit 20 can be optimized by the arrangement of the light-emitting diodes 40 (see Fig. 2). It is moreover possible to arrange the light-emitting diodes 40 according to mere design aspects as long as sufficient illumination of the mirror unit 20 is guaranteed. It is moreover possible to use light-emitting diodes 40 of various colors while white light-emitting diodes 40 are preferred in accordance with the present invention. Moreover, the light-emitting diodes 40 can be used in combination with known optical filters, lenses, prisms or something similar, in order to achieve certain optical effects.

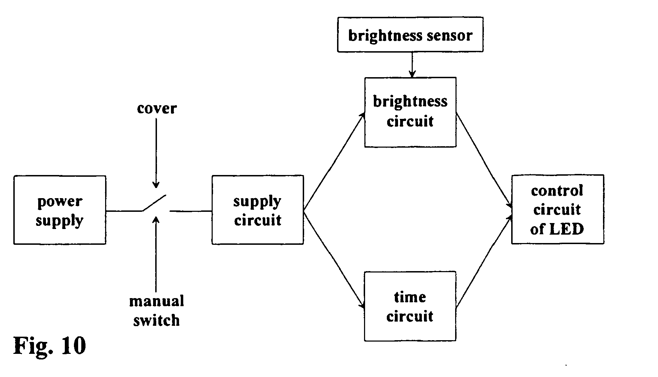

Figure 10 is a float chart showing the cooperation of the technical components of the illuminated mirror unit 20 in accordance with the present invention. A power supply and an electrical supply circuit for supply of the mirror unit 20 provides electrical power or a distribution voltage. The distribution voltage is either switched on by opening the cover 60 or by manually actuating a switch of the illuminated mirror unit 20. This switching simultaneously activates the brightness circuit and the time circuit. The brightness-measuring circuit and the electrical signal created therein answer the question whether and if, with what intensity the illuminated mirror unit 20 has to be illuminated with the light-emitting diodes 40 regarding the brightness of the surroundings of the mirror unit 20. This signal is transmitted to the control circuit of the light-emitting diodes 40 in order to switch on the corresponding number of light-emitting diodes 40. The time circuit, however, measures a time interval after the expiration of which the electrical supply of the light-emitting diodes 40 is automatically interrupted. The control of the light-emitting diodes 40 moreover controls which light-emitting diodes 40 are switched on in which order and with which intensity, depending on the electrical signals of the brightness-measuring circuit. Correspondingly, they also control switching off of the light-emitting diodes 40.

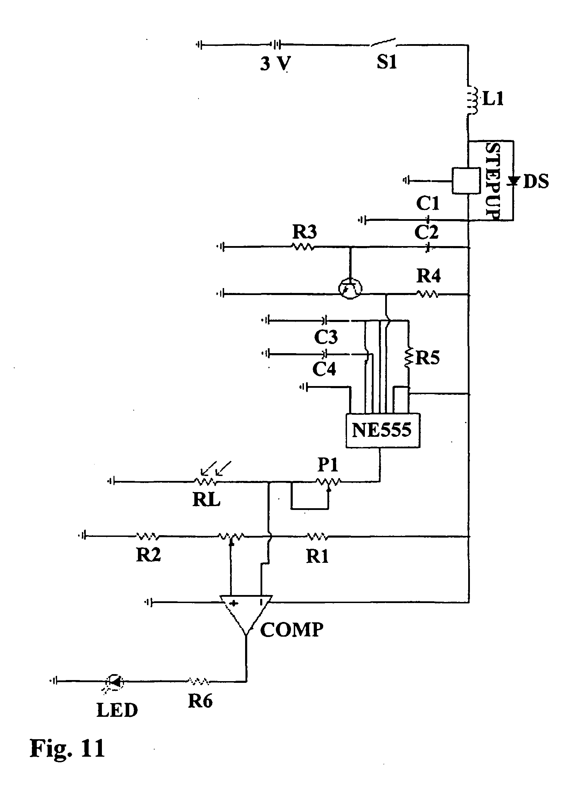

Fig. 11 shows the according to the invention preferred complete circuit diagram for electrically controlling said mirror unit 20. Said complete circuit diagram comprises said different components which were already explained above in the context of said supply circuit, said brightness circuit and said time circuit.

### List of reference numbers

- 1: sun visor with an installed, illuminated mirror unit
- 10: sun visor
- 20: illuminated mirror unit
- 30: mirror
- 40: illumination means, e.g. light-emitting diodes
- 50: frame construction
- 60: cover
- 80: transparent portion of the mirror
- 90: micro-switch
- 100: electric circuit board
- 110: connection to power supply
- 120: reflective material
- 130: protection film
- 140: electrical supply

## Claims

1. An illuminated mirror unit (20) for motor vehicles, in particular for sun visors (1), mounted in the interior of a motor vehicle, comprising:
a) a mirror (30) with at least one light emitting diode LED (40), preferably a white LED (40), for illuminating said mirror (30); and
b) an electric circuit for supplying said LED (40) with power and for controlling said LED (40), **characterized in that** said electric circuit is arranged on a printed circuit board (100) and that said illuminated mirror unit (20) is to be removably mounted in the vehicle and comprises at least two different mirrors (30), in particular a concave mirror, the backsides of said mirrors facing each other.

2. The illuminated mirror unit (20) according to claim 1, wherein said electric circuit is operated independent of an electrical supply of the motor vehicle.

3. The illuminated mirror unit (20) according to claims 1 or 2, wherein said LED (40) are provided in such a way that said at least two mirrors (30) are illuminated simultaneously or separately from each other.

4. The illuminated mirror unit (20) according to any of the preceding claims, wherein the illuminated mirror unit (20) comprises at least one pivotable cover (60).

5. The illuminated mirror unit (20) according to claim 4, wherein said LED (40) are switched on and off by means of a separate switch (90) or by opening and closing of said cover (60).

6. The illuminated mirror unit (20) according to any of the preceding claims, wherein said LED (40) are switched off after a certain time interval by means of a time circuit.

7. The illuminated mirror unit (20) according to any of the preceding claims, wherein said LED (40) are used depending on the brightness of the surroundings, determined by means of the signal from a brightness-measuring circuit.

8. The illuminated mirror unit (20) according to claim 7, wherein one of said at least two mirrors (30) is at least partially semipermeable and wherein the brightness is measured through the semipermeable portion of said mirror (30).

9. The illuminated mirror unit (20) according to claim 1, wherein said mirror comprises transparent portions (80) so that illumination of said mirror unit (20) is realized through said transparent portions (80) of said mirror (30).

## Patentansprüche

1. Eine beleuchtete Spiegeleinheit (20) für Kraftfahrzeuge, insbesondere für Sonnenblenden (1), die im Inneren eines Kraftfahrzeugs installiert ist, aufweisend:
**a.** einen Spiegel (30) mit mindestens einer Leuchtdiode (LED) (40), bevorzugt eine weiße LED (40), zum Beleuchten des Spiegels (30); und
**b.** eine elektrische Schaltung zur Energieversorgung der LED (40) und zur Steuerung der LED (40), **dadurch gekennzeichnet, dass** die elektrische Schaltung auf einer Leiterplatte (100) angeordnet ist und dass die beleuchtete Spiegeleinheit (20) abnehmbar in dem Fahrzeug befestigt ist und zumindest zwei verschiedene Spiegel (30) aufweist, insbesondere einen konkaven Spiegel, deren Rückseiten einander gegenüberliegend angeordnet sind.

2. Die beleuchtete Spiegeleinheit (20) gemäß Anspruch 1, wobei die elektrische Schaltung unabhängig von einer elektrischen Versorgung des Kraftfahrzeugs betrieben wird.

3. Die beleuchtete Spiegeleinheit (20) gemäß Anspruch 1 oder 2, wobei die LED (40) derart angeordnet ist, dass die mindestens zwei Spiegel (30) gleichzeitig oder getrennt voneinander beleuchtet werden.

4. Die beleuchtete Spiegeleinheit (20) gemäß einem der vorhergehenden Ansprüche, wobei die beleuchtete Spiegeleinheit (20) mindestens eine schwenkbare Abdeckung (60) aufweist.

5. Die beleuchtete Spiegeleinheit (20) gemäß Anspruch 4, wobei die LED (40) durch einen separaten Schalter (90) oder durch das Öffnen und Schließen der Abdeckung (60) geschaltet wird.

6. Die beleuchtete Spiegeleinheit (20) gemäß einem der vorhergehenden Ansprüche, wobei die LED (40) mit Hilfe einer Zeitschaltung nach einem bestimmten Zeitintervall abgeschaltet wird.

7. Die beleuchtete Spiegeleinheit (20) gemäß einem der vorhergehenden Ansprüche, wobei die LED (40) in Abhängigkeit von der Umgebungshelligkeit verwendet wird, die mit Hilfe des Signals einer Helligkeits-Messschaltung bestimmt wird.

8. Die beleuchtete Spiegeleinheit (20) gemäß Anspruch 7, wobei einer der mindestens zwei Spiegel (30) zumindest teilweise halbdurchlässig ist und die Helligkeitsmessung durch den halbdurchlässigen Bereich des Spiegels (30) erfolgt.

9. Die beleuchtete Spiegeleinheit (20) gemäß Anspruch 1, wobei der Spiegel transparente Bereiche (80) aufweist, so dass eine Beleuchtung der Spiegeleinheit (20) durch die transparenten Bereiche (80) des Spiegels (30) realisiert wird.

## Revendications

1. Un ensemble miroir éclairé (20) pour véhicules automobiles, en particulier pour pare-soleils (1), monté à l'intérieur d'un véhicule automobile, comprenant :
a) un miroir (30) avec au moins une diode électroluminescente DEL (40), de préférence une DEL blanche (40), pour éclairer ledit miroir (30) ; et
b) un circuit électrique pour alimenter ladite DEL (40) en énergie et pour commander ladite DEL(40), **caractérisé en ce que** ledit circuit électrique est disposé sur une carte de circuit imprimé (100) et **en ce que** ledit ensemble miroir éclairé (20) doit pouvoir être monté amovible dans le véhicule et comporte au moins deux miroirs différents (30), en particulier un miroir concave, les dos desdits miroirs étant en vis-à-vis l'un de l'autre.

2. L'ensemble miroir éclairé (20) selon la revendication 1, dans lequel ledit circuit électrique est mis en fonction indépendamment d'une alimentation électrique du véhicule automobile.

3. L'ensemble miroir éclairé (20) selon la revendication 1 ou 2, dans lequel lesdites DEL (40) sont prévues de telle sorte qu'au moins deux miroirs (30) sont éclairés simultanément ou séparément l'un de l'autre.

4. L'ensemble miroir éclairé (20) selon l'une des revendications précédentes, dans lequel l'ensemble miroir éclairé (20) comprend au moins un couvercle pivotant (60).

5. L'ensemble miroir éclairé (20) selon la revendication 4, dans lequel lesdites DEL (40) sont allumées et éteintes par l'intermédiaire d'un commutateur distinct (90) ou par ouverture et fermeture dudit couvercle (60).

6. L'ensemble miroir éclairé (20) selon l'une des revendications précédentes, dans lequel lesdites DEL (40) sont allumées et éteintes après un certain laps de temps au moyen d'un circuit temporisateur.

7. L'ensemble miroir éclairé (20) selon l'une des revendications précédentes, dans lequel lesdites DEL (40) sont utilisées en fonction de la luminosité environnante, déterminée par l'intermédiaire du signal d'un circuit de mesure de luminosité.

8. L'ensemble miroir éclairé (20) selon la revendication 7, dans lequel l'un desdits au moins deux miroirs (30) est au moins partiellement semi-perméable, et dans lequel la luminosité est mesuré au travers de la partie semi-perméable dudit miroir (30).

9. L'ensemble miroir éclairé (20) selon la revendication 1, dans lequel ledit miroir comprend des parties transparentes (80) de sorte que l'éclairage dudit ensemble miroir (20) est réalisé au travers desdites parties transparentes (80) dudit miroir (30).
